# EUROPEAN PATENT SPECIFICATION

(11) **EP 3 962 191 B1**
(45) Date of publication and mention of the grant of the patent: **06.11.2024**
(21) Application number: 20193727.3
(22) Date of filing: 31.08.2020
(51) Int. Cl.: H04W 72/02, H04W 74/0808, H04W 84/18

(54) **RADIO FOR A RADIO NETWORK, RADIO NETWORK AS WELL AS METHOD OF ALLOCATING RADIO RESOURCE**
FUNK FÜR EIN FUNKNETZWERK, FUNKNETZWERK SOWIE VERFAHREN ZUR ZUWEISUNG VON FUNKRESSOURCEN
RADIO POUR UN RÉSEAU RADIO, RÉSEAU RADIO ET PROCÉDÉ D'ATTRIBUTION DE RESSOURCES RADIO

(43) Date of publication of application: 02.03.2022
(73) Proprietor: Rohde & Schwarz GmbH & Co. KG, 81671 München (DE)
(72) Inventor: Rautenberg, Mathias, 81671 München (DE); Juenger, Niklas, 81671 München (DE); Boegl, Thomas, 81671 München (DE)
(74) Representative: Novagraaf Group

(56) References cited:
- WO-A1-2020/011336
- WO-A1-2020/064643
- US-A1- 2008 101 284

## Description

The invention relates to a radio for a radio network with dynamic and distributed radio resource allocation. Further, the invention relates to a radio network for dynamic and distributed radio resource allocation as well as a method of allocating radio resource in a dynamic and distributed manner.

In the state of the art, radio allocation of several radios in a radio network is done according to a pre-defined hierarchy that is provided by a central server structure after a time-consuming and resource-intensive planning phase. The different radios of the radio network communicate with the central server structure in order to obtain a certain chunk of a radio spectrum to be used for receiving and/or transmitting radio signals. The server structure manages the radio allocation of the radio spectrum, particularly the different chunks of the radio spectrum, thereby ensuring consistence within the radio network.

However, the radio networks known in the state of the art provide a fixed and therefore limited radio allocation, thereby restricting the overall flexibility of the individual radios for communicating among each other. Accordingly, the radio communication is difficult in case that the frequencies, particularly any spare frequencies, of the radio spectrum are disturbed.

Moreover, the radio networks known in the state of the art are expensive since the central server structure has to be established and maintained appropriately, resulting in facility and maintenance costs of the server structure. In addition, a single point of failure, namely the central server structure, is provided which makes the entire radio network more vulnerable since the radio network depends on the central server structure.

A method and apparatus for determining appropriate channels for communication are described in US 2008/0101284 A1.

WO 2020/064643 A1 describes a method for managing sidelink resources.

WO 2020/011336 A1 describes a multi-level indicator of radio resource status for intended D2D transmission.

Accordingly, there is a need for a simple and cost-efficient way to provide a radio allocation for radios in a radio network.

The invention provides a radio for a radio network with dynamic and distributed radio resource allocation. The radio comprises a sensing module that is configured to sense a radio spectrum, thereby obtaining sensing data. The radio comprises a transmission module that is configured to transmit a radio signal. The sensing module and the transmission module are interconnected with each other such that the sensing module is configured to forward information associated with the sensing data to the transmission module for transmitting the information encompassed in a radio signal to a second radio of the radio network. The information corresponds to at least one frequency range within the radio spectrum which is to be used by the radio for receiving radio signals. The at least one frequency range corresponds to a frequency hopset that defines which frequency or frequency sub-range is used at a certain time while hopping between different frequencies or different frequency ranges.

Further, the invention provides a radio network for dynamic and distributed radio resource allocation, wherein the radio network comprises at least one radio as defined above as well as a second radio. The radio and the second radio are configured to communicate with each other via radio signals. Particularly, the radio network has a flat hierarchy, resulting in all radios having equal roles.

Furthermore, the invention provides a method of allocating radio resource in a dynamic and distributed manner, wherein the method comprises the steps of:
- Providing at least one radio as defined above,
- Sensing a radio spectrum by means of the sensing module of the radio, thereby obtaining sensing data,
- Forwarding information associated with a sensing data to the transmission module of the radio, wherein the information corresponds to at least one frequency range within the radio spectrum which is to be used by the radio for receiving radio signals, and wherein the at least one frequency range corresponds to a frequency hopset that defines which frequency or frequency sub-range is used at a certain time while hopping between different frequencies or different frequency ranges, and
- Transmitting the information encompassed in a radio signal to a second radio of the radio network.

The invention provides a dynamic radio allocation for the respective radio since the radio itself is enabled to sense the radio spectrum in order to determine an already existing allocation of the radio spectrum to be used by the radio for communication purposes. The radio is generally enabled to manage the radio allocation while communicating with the other radios within the same radio network. In fact, each radio is enabled to sense the respective radio spectrum in order to gather information concerning the radio spectrum. Moreover, the respective information gathered can be used for allocation purposes. Put differently, each radio of the radio network is enabled to independently sense the radio spectrum in order to gather information concerning the current allocation of the radio spectrum. Hence, spare frequencies or frequency ranges can be identified by the radio itself, which can be used by the radio for communication purposes. The spare frequencies or frequency ranges relate to unoccupied or rather undisturbed ones.

The radio may comprise a wideband filter for filtering the radio spectrum in a broadband or rather wideband manner, thereby gathering as much information as possible. The bandwidth of the sensing performed by the radio, namely the bandwidth of the wideband filter, can be set, particularly in dependency of the respective task or rather operation.

In the radio network with the different radios, the respective functionality concerning the radio resource management (RRM) is distributed among the different radios of the radio network, thereby establishing the dynamic and distributed radio network with the dynamic and distributed radio resource allocation. However, each individual radio of the radio network is enabled to independently sense the radio spectrum in order to identify frequencies or rather frequency ranges that can be used for radio communication by itself.

The decentralized management of the radio resource allocation ensures that the overall costs of the radio network may be reduced.

In addition, a single point of failure is avoided effectively since no central server structure is needed anymore that was previously used for the centralized radio resource management. Put differently, a central management unit for radio resource management, for instance the central server structure, is no more necessary since the respective functionality is provided by the individual radio(s) of the radio network themselves, namely in a distributed or rather decentralized manner.

Since no central server structure for the management of the radio allocation is necessary, the entire radio system is more robust, particularly when using typical waveforms for the radio signals for communication purposes. In fact, any disturbance of the radio spectrum is not promising since the radio itself scans the radio spectrum and identifies noise or any interfering signal source, for instance a jammer, which is disturbing the radio communication.

Furthermore, the entire radio network, particularly each individual radio, has a higher dynamic concerning its communication characteristics, namely transmission and reception of radio signals, compared to radio networks and/or radios known in the state of the art since each radio of the radio network can promptly identify an optimal frequency range for radio communication, namely an optimal allocation in the radio spectrum.

Since the radio allocation is dynamic, each radio of the radio network is generally enabled to use the entire radio spectrum. Put differently, the radios are not restricted to predefined frequency ranges of the radio spectrum, ensuring the flexibility of the individual radios and the entire radio network.

In addition, the radio network is simplified, thereby reducing the costs in total, since the efforts associated with the configuration of a certain task or rather operation can be reduced. For instance, control messages sent to the central server structure are not required anymore, thereby also reducing the amount of signals exchanged.

Particularly, the radio allocation concerns the allocation of frequencies or rather frequency ranges that are new, available and/or undisturbed such that these frequencies or rather frequency ranges can be used by the respective radio for communication purposes.

Accordingly, the radio itself is enabled to determine the frequency range that is to be used for receiving radio signals. Hence, the radio is enabled to determine the respective frequency range to be used by the second radios that communicate with the respective radio. Since this information is forwarded to the transmission module of the respective radio which in turn transmits the information, the radio is enabled to determine its receiving properties and to communicate them accordingly. In other words, the second radio(s) receive(s) the information concerning the frequency (range) used by the respective radio for receiving radio signals. This information can be processed by the second radio(s) when transmitting radio signals, thereby ensuring proper communication among the radios of the radio network.

The at least one frequency range to be used for receiving radio signals corresponds to a frequency hopset. The frequency hopset may comprise the at least one frequency range determined. In fact, the frequency hopset comprises the at least one frequency range encompassing several frequencies or frequency sub-ranges to be used. The frequency hopset generally defines which frequency or rather frequency sub-range is used at a certain time while hopping between the different frequencies or different frequency ranges, particularly in a predefined manner.

The information may also encompass information concerning the receive power and/or transmit power. Therefore, the radio may also forward information to the second radio that can be processed by the second radio such that the second radio is set in an appropriate manner for communicating with the respective radio. In fact, the power of the radio transmission of the second radio(s) can be indirectly set by the radio that has sensed the radio spectrum previously in order to identify the at least one frequency range to be used for receiving the radio signals from the second radio(s).

An aspect provides that the sensing data obtained by the sending module corresponds to an allocation of the radio spectrum. As mentioned above, the radio itself is enabled to identify the current allocation of the respective radio spectrum sensed in order to identify available frequency channels or rather frequency ranges that can be used by the radio for communication purposes. Hence, the sensing module senses the radio spectrum to be used in order to observe the current allocation of the radio spectrum, wherein the respective information is used by the radio.

Another aspect provides that the radio is configured to autonomously determine at least one frequency range in dependency of the sensing data obtained. Since the radio itself is enabled to identify the current allocation of the radio spectrum by scanning the radio spectrum, the radio itself is also enabled to determine at least one frequency range in dependency of the sensing data obtained. The at least one frequency range may be a spare one. In any case, no interaction with a centralized unit such as the central server structure is necessary in order to gather the respective information, namely the at least one frequency range. In fact, the at least one frequency range can be derived from the sensing data obtained when sensing the radio spectrum accordingly.

According to another aspect, the radio is configured to forward the information to at least one next radio in a hop radio network. The next radio corresponds to a next node in the hop radio network, namely a neighbored node. The respective hop radio network ensures that radio signals are only forwarded to the next radio/node within the respective radio network wherein the information submitted is used, namely the at least one frequency range associated therewith. A single radio may comprise more than one next radio wherein different information may be forwarded to the different next radios, thereby ensuring that the radios are enabled to set individual communication links between each other. The radios are enabled to communicate with each other in a defined manner via the communication links while using the frequency ranges.

In addition, the radio may have a receiving module for receiving another radio signal from a second radio. The radio is configured to sense the radio spectrum by means of the sensing module, to transmit the radio signal by means of the transmission module and/or to receive the another radio signal by means of the receiving module simultaneously. Therefore, the spectrum sensing may be done in parallel to the normal operation of the radio since the radio is enabled to sense the radio spectrum as well as to transmit radio signals and/or to receive radio signals simultaneously. The respective radio may be a full-duplex radio that is capable of receiving and transmitting radio signals simultaneously. Accordingly, the radio may be enabled to sense the radio spectrum, to receive radio signals and to transmit radio signals simultaneously.

However, the sensing and the normal operation, namely transmitting and/or receiving, may also be performed subsequently.

In general, the radio may comprise different operation modes, for instance fixed frequency (FF), frequency hopping (FH), Direct-sequence spread spectrum (DSSS) and so on. The sensing may be performed in any of these different operation modes.

Another aspect provides that the radio has a memory configured to store information received from at least one second radio. Particularly, the information is internally stored in a table format. The radio receives information of second radios, particularly next radios that communicate with the respective radio, wherein the information received concerns the frequency range to be used for transmitting radio signals to the next radio(s) from which the respective radio has received the information. In other words, the respective radio is enabled to store the received information how to communicate with the next radio(s) since the received information relates to the frequency range used for receiving radio signals by the second radio(s).

Accordingly, the allocation is done in a distributed and dynamic manner since all radios communicate with each other, thereby exchanging the frequency ranges to be used by their neighbored radios, namely the second radios, for radio communication.

This information may be transmitted separately by a dedicated radio signal or as additional information on a radio signal sent anyway, which is also called "piggyback".

Another aspect provides that the radio has an evaluation module which is configured to evaluate the sensing data and/or information received from a second radio. In general, the information can be distributed within the entire radio system, wherein each individual radio may be enabled to evaluate the information obtained from the radios. Moreover, the individual radios may together evaluate the information available in order to identify frequency ranges to be used preferably, namely those frequency ranges without any disturbances. The frequency ranges are associated with communication links between neighbored radios.

Moreover, a geographical frequency map concerning place and time or the available signal power can be created.

In general, each radio of the radio network determines individually and independently of the other radios, namely the second radios, the frequency range based on the sensing data obtained. The radios each transmit the respective information associated with the sensing data to the next radio(s) in order to inform the next radio(s) concerning the frequency range(s) to be used for receiving radio signals. Accordingly, the next radio(s) are informed on which frequencies or rather frequency range(s) they have to transmit radio signals in order to ensure that they will be received by the respective radio. In other words, the next radio(s) obtain the information from the respective radio how to reach the respective radio in an appropriate manner.

The radio provides a separate set of frequencies for each next radio from the frequency recommendation derived from the sensing data. For instance, step frequencies are selected from the frequency recommendation for jumping waveforms.

An aspect provides that the sensing is performed periodically. The information concerning the radio allocation is gathered several times, particularly in each frame. Hence, the radio network is enabled to react on any upcoming disturbances in order to adapt the frequency range(s) to be used by the second radio(s) for radio communication, namely transmission of radio signals.

According to another aspect, the sensing takes place in a defined time slot within a frame, particularly a frame associated with a time-division multiple access (TDMA) method. The sensing of the radio spectrum is done in a defined manner and for a defined time period that is associated with the time slot. Hence, the sensing may be done periodically, for instance in each frame even though the relative position within the respective frame may vary.

In fact, the sensing, namely the wideband analysis of the radio spectrum, takes place in a free slot of the frame, particularly the frame associated with the TDMA method.

Generally, the sensing may be performed for a certain time period, particularly within a certain percentage of the overall time available for radio communication, such as 5%.

For instance, the defined time slot is selected manually. A user of the respective radio or rather the entire radio network is enabled to manually start the sensing such that the next available time slot is used to perform the sensing of the radio spectrum. Moreover, a manual override may be provided.

Alternatively, the sensing may be done automatically, for instance based on an algorithm that runs on the respective radio, particularly on a processor of the radio. Thus, no manual interaction is required.

In fact, the sensing may be performed prior to establishing a communication link between two radios in order to scan the current allocation of the radio spectrum and to identify the at least one frequency range that can be used for communicating with each other.

Another aspect provides that a position of the time slot within the frame is variable such that the time slot is located at different positions in the different frames. In other words, a variation of the time slot is obtained with respect to its position and the frame, thereby ensuring that the sensing does not take place at the same position in each frame even though the sensing may take place every frame. Hence, the relative position of the time slot associated with the sensing is variable with respect to the entire duration of the frame.

Particularly, the respective position of the time slot within in the frames varies over time such that the sensing appears like jitter and/or pseudo-noise. This appearance is ensured due to the fact that the sensing takes place periodically or rather within each frame, but at different positions within the frames.

Generally, the radio is configured to decide independently and decentrally on which frequencies the respective radio will receive radio signals and communicate this decision to its direct neighbored radios, namely the second radios. For the decision, the respective radio has previously observed the radio spectrum, particularly certain frequency ranges. This has been done independently from the second radios. Put differently, the respective radio independently selects at least one preferred frequency range or rather frequencies based on its sensing data obtained previously, on which the respective radio is enabled to receive radio signals from the second radio(s). The respective information concerning the at least one preferred frequency range or rather frequencies is distributed to the second radios, namely its neighbored radios. Then, these second radios obtain the information on which frequencies or rather frequency range(s) the respective radio can be reached for communication purposes.

For instance, the sensing may be done when all second radios, a few of all second radios or none of the second radios are/is switched off.

In general, the different aspects and their advantages mentioned above apply in a similar manner to the radio itself, the radio network as well as the method accordingly.

The foregoing aspects and many of the attended advantages of the claimed subject matter will become more readily appreciated as the same become better understood by reference to the following detailed description, when taken in conjunction with the accompanying drawings, wherein:
- Figure 1 schematically shows a claimed radio network according to the invention that comprises several radios according to the invention,
- Figure 2 schematically shows a claimed radio according to the invention in more detail,
- Figure 3 shows an overview illustrating the step of sensing the radio spectrum of a claimed method of allocating radio resource in a dynamic and distributed manner according to the invention, and
- Figure 4 schematically shows an overview illustrating the result obtained by a method of allocating radio resource according to the invention.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when greater than three elements are listed. In other words, the term "at least one of A and B" generally means "A and/or B", namely "A" alone, "B" alone or "A and B".

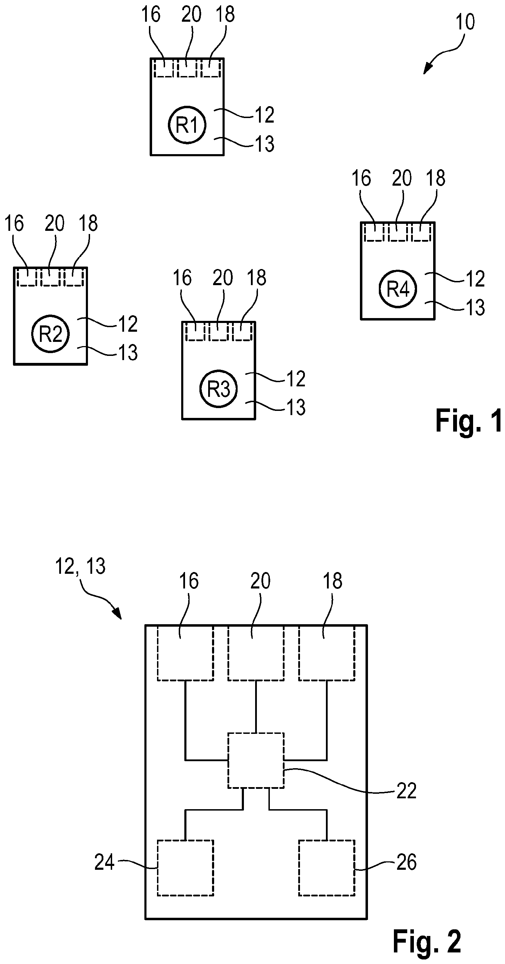

In Figure 1, a radio network 10 is shown that comprises a radio 12 and several second radios 13 that are neighbored radios or next radios with respect to the radio 12. In fact, the radio 12 indicated by the encircled R1 has three neighbored radios 13 labelled by encircled R2 to R4. Generally, the radios 12, 13 are enabled to communicate with each other via radio signals.

The radio network 10 corresponds to a hop radio network in which the radios 12, 13 communicate with next radio, also called next node, neighbored node or rather neighbored radio.

As shown in Figure 1, the radio network 10 comprises four radios 12, 13 in total, namely the respective radio 12 and three second radios 13, which are neighbored to the radio 12. The radios 12, 13 have equal roles such that the radio network 10 has a flat hierarchy.

The radios 12, 13 are each established in a similar manner, wherein one of these radios 12 is shown in Figure 2 in more detail. Accordingly, each of the radios 12, 13 can be operated as the respective radio 12 or rather the second radio 13 neighbored to the respective radio 12.

For communication purposes, each radio 12, 13 comprises a transmission module 16 that is configured to transmit a radio signal to at least one neighbored radio as well as a receiving module 18 for receiving at least one radio signal from the corresponding neighbored radio(s).

The radio 12, 13 may correspond to a full-duplex radio that is capable of transmitting and receiving radio signals in parallel. Accordingly, the transmission module 16 and the receiving module 18 may be associated with an own antenna for receiving or rather transmitting purposes.

In addition, each radio 12, 13 comprises a sensing module 20 that is configured to scan or rather sense a radio spectrum that can be used by the radio 12, 13 for radio communication with the other radios 12, 13.

The sensing module 20 observes the radio spectrum wherein sensing data is obtained that is forwarded to an internal processor 22 of the radio, also called processing module.

The processor 22 is connected with the transmission module 16 and the receiving module 18 such that the data to be transmitted and/or received is processed internally by the radio 12, 13 in a defined manner.

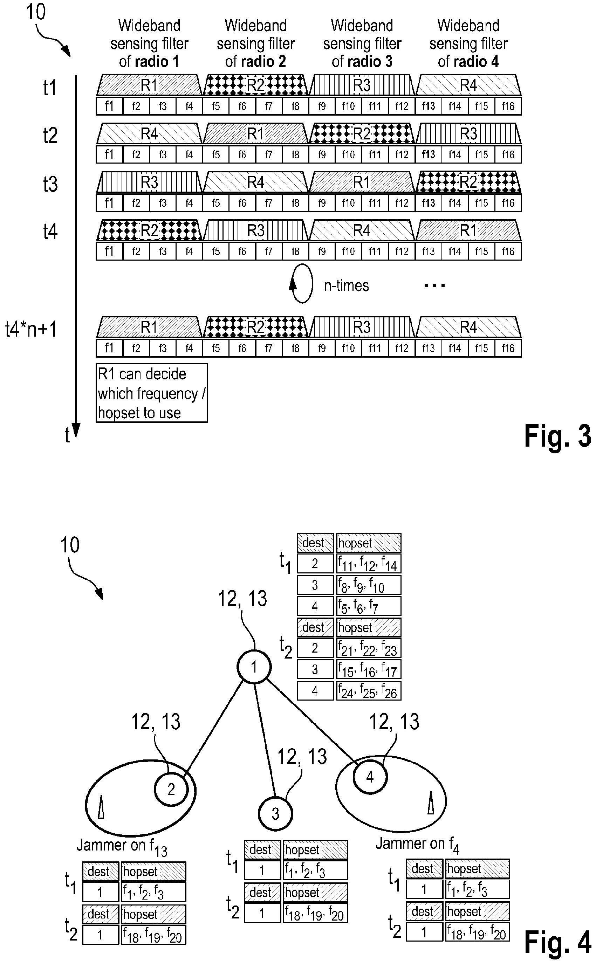

In the shown embodiment, the sensing module 20 and the transmission module 16 are interconnected with each other via the processor 22 such that the sensing data obtained can be forwarded from the sensing module 20 to the transmission module 16 via the processor 22. Then, the sensing data can be transmitted to one of the next radios 13 neighbored to the radio 12 as will be described later with reference to Figures 3 and 4.

In general, the radio 12 is configured to process the sensing data obtained by the sensing module 20 in order to gather information of the radio spectrum.

In order to gather the information from the sensing data, the radio 12 may use an evaluation module 24 that is also connected with the processor 22. Hence, the sensing data obtained from the sensing module 20 is forwarded to the evaluation module 24 that evaluates the sensing data obtained from the sensing module 20 in order to gather information to be used for informing the second radios 13 appropriately as will be described later with reference to Figures 3 and 4.

The processor 22 is enabled to access the evaluation module 24 such that the information gathered can be retrieved and forwarded to the transmission module 16 accordingly.

Alternatively, the processor 22 only controls the individual modules 16, 18, 20, 24 to exchange data and/or information in a certain way.

The sensing performed by the sensing module 20 is associated with identifying a current allocation of the radio spectrum to be used by the radio 12. This is shown in Figure 3 illustrating an overview of the allocation of the radio spectrum that is used by four different radios 12, 13, which are labelled by R1 to R4.

In fact, the radios 12, 13 each sense the allocation of the radio spectrum at different times as indicated by t1 to t4. Moreover, the allocation is sensed in a periodic manner, namely n-times.

Generally, the radio 12, 13 is configured to simultaneously sense the radio spectrum, receive a radio signal and/or transmit a radio signal. Therefore, the sensing may be done in parallel to the normal operation of the radio 12, 13.

The radios 12, 13 use a wideband sensing filter that has a certain bandwidth such that several frequencies or rather frequency sub-ranges are sensed by each radio 12, 13, particularly four frequencies or rather frequency sub-ranges in the shown embodiment of Figure 3.

The information obtained from sensing the radio spectrum is transmitted via the transmission module 16 to at least one of the second radios 13 that are neighbored ones in order to forward the information derived from the sensing to the second radios 13 appropriately.

In other words, the respective radio 12 is enabled to sense the radio spectrum, thereby obtaining the sensing data that is processed internally in order to gather certain information from the sensing data wherein this information is distributed or rather forwarded to the neighbored/second radios 13 so as to inform the second radios 13 appropriately.

Generally, the information obtained from the sensing data corresponds to at least one frequency range within the radio spectrum sensed. Particularly, the information corresponds to the at least one frequency range to be used by the radio 12 for receiving radio signals.

Accordingly, the radio 12 can autonomously determine at least one frequency range in dependency of the sensing data obtained which is used by the radio 12 itself for receiving radio signals from the neighbored radios 13. This is possible since the radio 12 previously senses the current allocation of the radio spectrum such that the radio 12 is enabled to determine any available frequency ranges for receiving radio signals.

This information, namely the at least one frequency range within the radio spectrum to be used for receiving radio signals, is forwarded to the other radios 13 in the radio network 10 by means of the transmission module 16 that transmits a corresponding radio signal that encompasses the information. Put differently, the radio 12 is enabled to inform the second radios 13 concerning the frequencies or rather frequency ranges to be used when communicating with the respective radio 12.

The second radios 13, namely the ones labelled with R2 - R4, receive the radio signal from the radio 12 labelled with R1. The radio signals are received by the respective receiving modules 18 of the second radios 13 wherein the received radios signals are forwarded to the evaluation module 24 of the second radios 13 in order to gather the information sent by the radio 12 labelled with R1.

Again, the information received via the radio signals may be processed by the processor 22 directly or rather the processor 22 controls the flow of data appropriately.

In any case, the second radios 13 get informed concerning the frequency range to be used when establishing a communication link with the radio 12 labelled with R1.

The same principle applies for all radios 12, 13 of the radio network 10 such that they inform each other concerning the frequencies or rather frequency ranges to be used for communication purposes. Since the radios 12, 13 perform the sensing previously in order to identify the current allocation of the radio spectrum, undisturbed or rather unoccupied frequency ranges can be used in a flexible manner.

Accordingly, a dynamic radio resource allocation is provided. This radio resource allocation is also done in a distributed manner without any central server structure since the radios 12, 13 each sense the radio spectrum in order to identify frequencies or rather frequency ranges to be used for receiving radio signals by themselves. The information gathered is forwarded to the respective second radios 13 such that they get informed how to communicate with the respective radio 12.

Besides the at least one frequency range, the respective radio 12 may also forward information concerning the receive power and/or transmit power such that the second radios 13 are set appropriately.

In general, the at least one frequency range may be part of a frequency hopset encompassing several frequencies or rather frequency sub-ranges to be used at certain times. Hence, the respective frequencies are changed over time according to the predefined frequency hopset. This is illustrated in Figure 4.

Each of the radios 12, 13 may generally comprise an internal memory 26 as show in Figure 2, which is used to store the information received from the radios 12, 13. As shown in Figure 4, the respective information can be stored in a table format, particularly for each destination radio (receiving radio) abbreviated by "dest" and/or for different times indicated by t1 and t2.

The respective frequency range is indicated by different frequencies to be used when communicating with the specific destination radio (receiving radio).

In addition, Figure 4 shows that a jammer on a certain frequency was identified when sensing the radio spectrum previously, namely a jammer on f13. Therefore, this frequency is skipped by the radio 12 labelled with "1" when sending radio signals to the radio 13 labelled with "2". The respective frequency hopset encompasses the frequencies f11, f12 and f14 associated with the at least one frequency range.

Moreover, Figure 4 reveals that the radios 12, 13 labelled with "2", "3" and "4" only communicate with the radio 12, 13 labelled with "1", but not among each other since they have only stored information received from the radio 12, 13 labelled with "1".

As mentioned above, this information is received by the respective receiving module 18 via radio signals received, wherein the radio signals may be evaluated by the evaluation module 24.

Accordingly, the evaluation module 24 also communicates with the memory 26 (via the processor 22) in order to store the information derived from the received radio signals.

The processor 22 is enabled to access the memory 26 in order to gather information concerning the frequency range to be used when communicating with a certain radio 13 such that this information is forwarded to the transmission module 16. In fact, the frequency range is selected for transmitting purposes that was specified previously by the radio 12 that shall receive the radio signal.

In any case, the radio 12, 13 is enabled to identify the radio allocation of the radio spectrum sensed by the sensing module 20 such that the radio 12, 13 is enabled to autonomously determine at least one frequency range to be used for receiving radio signals (at a certain time).

This information is distributed within the radio network 10 as shown in Figure 4 such that the respective radios 12, 13 may store the information concerning the frequency range(s) to be used for transmitting radio signals to the radio(s) 12, 13 that have previously communicated the information derived from the sensing data, namely the at least one frequency range to be used.

In general, the sensing may take place in a defined time slot within a frame of the communication. Accordingly, the respective frame, for instance a frame according to time-division multiple access (TDMA), is configured such that a specific time slot within the frame is exclusively dedicated to the (wideband) sensing, thereby avoiding any reservation mechanisms.

However, this periodic sensing, which may be done in each frame, does not have the exact same position within the different frames, but varies with respect to its temporal position in the frames. In other words, its relative position varies. The variation of the position within the frame may be determined automatically such that it appears like a jitter in a noisy, quasi random manner.

The sensing generally ensures that each radio 12, 13 obtains an overview of the current activities in the radio spectrum, namely its allocation. The sensing is done by all radios 12, 13 of the radio network 10 in a similar manner. Hence, the receiving radio 12 scans the radio spectrum, thereby obtaining sensing data associated with information which is transmitted by the respective radio 12 to the second radios 13, which are the next radios.

The information may relate to a preferred frequency hopset (encompassing at least one frequency range or rather frequencies), which is to be used by the second radios 13 when transmitting radio signals or rather data to the respective radio 12.

After receiving the information, every radio 12, 13 will use the at least one frequency range specified for upcoming communication. Moreover, each radio 12, 13 maintains an internal storage data format, for instance a table, in which the specified frequency range(s) for all next radios 13 are listed.

In general, the receiving frequency hopset and the transmitting frequency hopset of each radio 12, 13 may be disjoint. Hence, these frequency hopsets are not equal. In fact, they are determined by different radios 12, 13, namely the respective receiving one(s). Accordingly, it is more complicated to identify the radios 12, 13.

Since the radios 12, 13 dynamically and autonomously determine the respective allocation of the radio spectrum, no concurring situations occur. Furthermore, each radio 12, 13 is generally enabled to use the entire radio spectrum.

The distributed radio resource management/allocation further ensures that the radio network 10 is less vulnerable while saving costs simultaneously.

## Claims

1. A radio for a radio network (10) with dynamic and distributed radio resource allocation, wherein the radio (12) comprises a sensing module (20) that is configured to sense a radio spectrum, thereby obtaining sensing data, wherein the radio (12) comprises a transmission module (16) that is configured to transmit a radio signal, and wherein the sensing module (20) and the transmission module (18) are interconnected with each other such that the sensing module (20) is configured to forward information associated with the sensing data to the transmission module (18) for transmitting the information encompassed in a radio signal to a second radio (13) of the radio network (10), wherein the information corresponds to at least one frequency range within the radio spectrum which is to be used by the radio (12) for receiving radio signals, **characterized in that** the at least one frequency range corresponds to a frequency hopset that defines which frequency or frequency sub-range is used at a certain time while hopping between different frequencies or different frequency ranges.

2. The radio according to claim 1, wherein the sensing data obtained by the sensing module (20) corresponds to an allocation of the radio spectrum.

3. The radio according to claim 1 or 2, wherein the radio (12) is configured to autonomously determine at least one frequency range in dependency of the sensing data obtained.

4. The radio according to any of the preceding claims, wherein the information also encompasses information concerning the receive power and/or transmit power.

5. The radio according to any of the preceding claims, wherein the radio (12) is further configured to forward the information to at least one next radio (13) in a hop radio network.

6. The radio according to any of the preceding claims, wherein the radio (12) has a receiving module (18) for receiving another radio signal from a second radio (13), and wherein the radio (12) is further configured to sense the radio spectrum by means of the sensing module (20), to transmit the radio signal by means of the transmission module (16) and/or to receive the another radio signal by means of the receiving module (18) simultaneously.

7. The radio according to any of the preceding claims, wherein the radio (12) has a memory (26) configured to store information received from at least one second radio (13), in particular wherein the information is internally stored in a table format.

8. The radio according to any of the preceding claims, wherein the radio (12) has an evaluation module (24) that is configured to evaluate the sensing data and/or information received from a second radio.

9. A radio network for dynamic and distributed radio resource allocation, wherein the radio network (10) comprises at least one radio (12) according to any of the preceding claims as well as a second radio (13), wherein the radio (12) and the second radio (13) are configured to communicate with each other via radio signals.

10. A method of allocating radio resource in a dynamic and distributed manner, wherein the method comprises the steps of:
- Providing at least one radio (12) according to any of claims 1 to 8,
- Sensing a radio spectrum by means of the sensing module (20) of the radio (12), thereby obtaining sensing data;
- Forwarding information associated with the sensing data to the transmission module (16) of the radio (12), wherein the information corresponds to at least one frequency range within the radio spectrum which is to be used by the radio (12) for receiving radio signals, and wherein the at least one frequency range corresponds to a frequency hopset that defines which frequency or frequency sub-range is used at a certain time while hopping between different frequencies or different frequency ranges; and
- Transmitting the information encompassed in a radio signal to a second radio (13) of the radio network (10).

11. The method according to claim 10, wherein the sensing is performed periodically.

12. The method according to claim 10 or 11, wherein the sensing takes place in a defined time slot within a frame, particularly a frame associated with a time-division multiple access method.

13. The method according to claim 12, wherein the defined time slot is selected manually.

14. The method according to claim 12 or 13, wherein a position of the time slot within the frame is variable such that the time slot is located at different positions in different frames.

15. The method according to claim 14, wherein the respective position of the time slot within the frames varies over time such that the sensing appears like jitter and/or pseudo-noise.

## Patentansprüche

1. Funkgerät für ein Funknetz (10) mit dynamischer und verteilter Funkressourcenzuweisung, wobei das Funkgerät (12) ein Erfassungsmodul (20) umfasst, das konfiguriert ist, um ein Funkspektrum zu erfassen und wobei dadurch Erfassungsdaten erhalten werden, wobei das Funkgerät (12) ein Sendemodul (16) umfasst, das konfiguriert ist, um ein Funksignal zu senden, und wobei das Erfassungsmodul (20) und das Sendemodul (18) derart miteinander verbunden sind, dass das Erfassungsmodul (20) konfiguriert ist, um Informationen, die mit den Erfassungsdaten verknüpft sind, an das Sendemodul (18) zum Senden der Informationen weiterzuleiten, die in einem Funksignal enthalten sind, an ein zweites Funkgerät (13) des Funknetzes (10), wobei die Informationen mindestens einem Frequenzbereich innerhalb des Funkspektrums entsprechen, der durch das Funkgerät (12) zum Empfangen von Funksignalen verwendet werden soll, **dadurch gekennzeichnet, dass** der mindestens eine Frequenzbereich einem Frequenzsprungsatz entspricht, der definiert, welche Frequenz oder welcher Frequenzunterbereich zu einem bestimmten Zeitpunkt während einem Springen zwischen unterschiedlichen Frequenzen oder unterschiedlichen Frequenzbereichen verwendet wird.

2. Funkgerät nach Anspruch 1, wobei die Erfassungsdaten, die durch das Erfassungsmodul (20) erhalten werden, einer Zuweisung des Funkspektrums entsprechen.

3. Funkgerät nach Anspruch 1 oder 2, wobei das Funkgerät (12) konfiguriert ist, um in Abhängigkeit der erhaltenen Erfassungsdaten mindestens einen Frequenzbereich autonom zu bestimmen.

4. Funkgerät nach einem der vorstehenden Ansprüche, wobei die Informationen ebenso Informationen bezüglich der Empfangsleistung und/oder der Sendeleistung enthalten.

5. Funkgerät nach einem der vorstehenden Ansprüche, wobei das Funkgerät (12) ferner konfiguriert ist, um die Informationen an mindestens ein nächstes Funkgerät (13) in einem Sprungfunknetz weiterzuleiten.

6. Funkgerät nach einem der vorstehenden Ansprüche, wobei das Funkgerät (12) ein Empfangsmodul (18) zum Empfangen eines anderen Funksignals von einem zweiten Funkgerät (13) aufweist, und wobei das Funkgerät (12) ferner konfiguriert ist, um das Funkspektrum mittels des Erfassungsmoduls (20) zu erfassen, um das Funksignal mittels des Sendemoduls (16) zu senden und/oder das andere Funksignal mittels des Empfangsmoduls (18) gleichzeitig zu empfangen.

7. Funkgerät nach einem der vorstehenden Ansprüche, wobei das Funkgerät (12) einen Speicher (26) aufweist, der konfiguriert ist, um Informationen zu speichern, die von mindestens einem zweiten Funkgerät (13) empfangen werden, insbesondere wobei die Informationen in einem Tabellenformat intern gespeichert werden.

8. Funkgerät nach einem der vorstehenden Ansprüche, wobei das Funkgerät (12) ein Auswertungsmodul (24) aufweist, das konfiguriert ist, um die Erfassungsdaten und/oder Informationen auszuwerten, die von einem zweiten Funkgerät empfangen werden.

9. Funknetz für eine dynamische und verteilte Funkressourcenzuweisung, wobei das Funknetz (10) mindestens ein Funkgerät (12) nach einem der vorstehenden Ansprüche sowie ein zweites Funkgerät (13) umfasst, wobei das Funkgerät (12) und das zweite Funkgerät (13) konfiguriert sind, um über Funksignale miteinander zu kommunizieren.

10. Verfahren zum Zuweisen von Funkressourcen auf eine dynamische und verteilte Weise, wobei das Verfahren die Schritte umfasst:
- Bereitstellen mindestens eines Funkgeräts (12) nach einem der Ansprüche 1 bis 8,
- Erfassen eines Funkspektrums mittels des Erfassungsmoduls (20) des Funkgeräts (12), wobei dadurch Erfassungsdaten erhalten werden;
- Weiterleiten von Informationen, die mit den Erfassungsdaten verknüpft sind, an das Sendemodul (16) des Funkgeräts (12), wobei die Informationen mindestens einem Frequenzbereich innerhalb des Funkspektrums entsprechen, der durch das Funkgerät (12) zum Empfangen von Funksignalen verwendet werden soll, und wobei der mindestens eine Frequenzbereich einem Frequenzsprungsatz entspricht, der definiert, welche Frequenz oder welcher Frequenzunterbereich zu einem bestimmten Zeitpunkt während des Springens zwischen unterschiedlichen Frequenzen oder unterschiedlichen Frequenzbereichen verwendet wird; und
- Senden der Informationen, die in einem Funksignal enthalten sind, an ein zweites Funkgerät (13) des Funknetzes (10).

11. Verfahren nach Anspruch 10, wobei das Erfassen in regelmäßigen Abständen durchgeführt wird.

12. Verfahren nach Anspruch 10 oder 11, wobei das Erfassen in einem definierten Zeitschlitz innerhalb eines Rahmens erfolgt, insbesondere eines Rahmens, der mit einem Zeitmultiplexverfahren verknüpft ist.

13. Verfahren nach Anspruch 12, wobei der definierte Zeitschlitz manuell ausgewählt wird.

14. Verfahren nach Anspruch 12 oder 13, wobei eine Position des Zeitschlitzes innerhalb des Rahmens derart variabel ist, dass sich der Zeitschlitz in unterschiedlichen Rahmen an unterschiedlichen Positionen befindet.

15. Verfahren nach Anspruch 14, wobei die jeweilige Position des Zeitschlitzes innerhalb der Rahmen mit der Zeit derart variiert, dass das Erfassen wie Jitter und/oder Pseudorauschen erscheint.

## Revendications

1. Radio pour un réseau radio (10) avec une attribution dynamique et distribuée de ressources radio, dans laquelle la radio (12) comprend un module de détection (20) qui est configuré pour détecter un spectre radio, obtenant ainsi des données de détection, dans laquelle la radio (12) comprend un module de transmission (16) qui est configuré pour transmettre un signal radio, et dans laquelle le module de détection (20) et le module de transmission (18) sont interconnectés l'un à l'autre de telle sorte que le module de détection (20) est configuré pour transférer des informations associées avec les données de détection au module de transmission (18) pour transmettre les informations contenues dans un signal radio à une seconde radio (13) du réseau radio (10), dans laquelle les informations correspondent à au moins une plage de fréquences dans le spectre radio qui doit être utilisée par la radio (12) pour recevoir des signaux radio, **caractérisée en ce que** l'au moins une plage de fréquences correspond à un ensemble de sauts de fréquence qui définit quelle fréquence ou sous-plage de fréquences est utilisée à un certain moment en sautant entre différentes fréquences ou différentes plages de fréquences.

2. Radio selon la revendication 1, dans laquelle les données de détection obtenues par le module de détection (20) correspondent à une attribution du spectre radio.

3. Radio selon la revendication 1 ou 2, dans laquelle la radio (12) est configurée pour déterminer de manière autonome au moins une plage de fréquences en fonction des données de détection obtenues.

4. Radio selon l'une quelconque des revendications précédentes, dans laquelle les informations contiennent également des informations concernant la puissance de réception et/ou la puissance d'émission.

5. Radio selon l'une quelconque des revendications précédentes, dans laquelle la radio (12) est en outre configurée pour transférer les informations à au moins une radio suivante (13) dans un réseau radio à sauts.

6. Radio selon l'une quelconque des revendications précédentes, dans laquelle la radio (12) a un module de réception (18) pour recevoir un autre signal radio provenant d'une seconde radio (13), et dans laquelle la radio (12) est en outre configurée pour détecter le spectre radio au moyen du module de détection (20), pour transmettre le signal radio au moyen du module de transmission (16) et/ou pour recevoir l'autre signal radio au moyen du module de réception (18) simultanément.

7. Radio selon l'une quelconque des revendications précédentes, dans laquelle la radio (12) a une mémoire (26) configurée pour stocker des informations reçues en provenance d'au moins une seconde radio (13), en particulier, dans laquelle les informations sont stockées en interne sous un format de table.

8. Radio selon l'une quelconque des revendications précédentes, dans laquelle la radio (12) a un module d'évaluation (24) qui est configuré pour évaluer les données de détection et/ou les informations reçues en provenance d'une seconde radio.

9. Réseau radio pour une attribution dynamique et distribuée de ressources radio, dans lequel le réseau radio (10) comprend au moins une radio (12) selon l'une quelconque des revendications précédentes ainsi qu'une seconde radio (13), dans lequel la radio (12) et la seconde radio (13) sont configurées pour communiquer l'une avec l'autre par l'intermédiaire de signaux radio.

10. Procédé d'attribution de ressources radio de manière dynamique et distribuée, dans lequel le procédé comprend les étapes consistant à :
- fournir au moins une radio (12) selon l'une quelconque des revendications 1 à 8,
- détecter un spectre radio au moyen du module de détection (20) de la radio (12), obtenant ainsi des données de détection ;
- transférer des informations associées aux données de détection au module de transmission (16) de la radio (12), dans lequel les informations correspondent à au moins une plage de fréquences dans le spectre radio qui doit être utilisée par la radio (12) pour recevoir des signaux radio, et dans lequel l'au moins une plage de fréquences correspond à un ensemble de sauts de fréquence qui définit quelle fréquence ou sous-plage de fréquences est utilisée à un certain moment en sautant entre différentes fréquences ou différentes plages de fréquences ; et
- transmettre les informations contenues dans un signal radio à une seconde radio (13) du réseau radio (10).

11. Procédé selon la revendication 10, dans lequel la détection est effectuée périodiquement.

12. Procédé selon la revendication 10 ou 11, dans lequel la détection a lieu dans un intervalle de temps défini au sein d'une trame, en particulier une trame associée à un procédé d'accès multiple par répartition dans le temps.

13. Procédé selon la revendication 12, dans lequel l'intervalle de temps défini est sélectionné manuellement.

14. Procédé selon la revendication 12 ou 13, dans lequel une position de l'intervalle de temps au sein de la trame est variable de telle sorte que l'intervalle de temps est situé à différentes positions dans différentes trames.

15. Procédé selon la revendication 14, dans lequel la position respective de l'intervalle de temps au sein des trames varie dans le temps de telle sorte que la détection apparaît comme une gigue et/ou un pseudo-bruit.
